# EUROPÄISCHE PATENTSCHRIFT

(11) **EP 1 142 543 B1**
(45) Veröffentlichungstag und Bekanntmachung des Hinweises auf die Patenterteilung: **15.12.2004**
(21) Anmeldenummer: 01108359.9
(22) Anmeldetag: 03.04.2001
(51) Int. Cl.: A61C 13/12

(54) **Zahntechnisches Fräsgerät**
Dental milling device
Appareil de fraisage dentaire

(30) Priorität: 07.04.2000 DE 10017474
(43) Veröffentlichungstag der Anmeldung: 10.10.2001
(73) Patentinhaber: DeguDent GmbH, 63457 Hanau (DE)
(72) Erfinder: Schostek, Gerd, 63571 Gelnhausen (DE); Brinkmann, Hartmut, 49163 Bohmte (DE); Lingemann, Klaus-Dietrich, 49090 Osnabrück (DE); Höh, Axel, 49163 Bohmte (DE)
(74) Vertreter: Stoffregen, Hans-Herbert, Dr. Dipl.-Phys.

(56) Entgegenhaltungen:
- DE-A- 3 611 518
- DE-A- 4 012 327
- DE-U- 7 908 672
- US-A- 4 478 580

## Beschreibung

Die Erfindung betrifft ein zahntechnisches Fräsgerät mit einem einen Arbeitstisch tragenden Grundkörper, der mit einer Führungssäule für einen höhenverstellbaren, eine Fräseinheit aufnehmenden Fräsarm verbunden ist, der seinerseits entlang einer Führungsbahn der Führungssäule mittels eines elektromotorischen Höhenverstellantriebs verfahrbar ist, der einen durch einen elektrischen Verstellmotor antreibbaren Spindeltrieb aufweist.

Beim Ausführen von Fräs- und Bohrarbeiten an zahntechnischen Objekten, insbesondere Zahnmodellen und Zahnersatzteilen, ist es erforderlich, neben einer horizontalen Positionierbarkeit der Fräs- oder Bohrwerkzeuge auch deren vertikale Position an die unterschiedlichen Höhen der verschiedenen Werkstücke anzupassen. Dabei ist es häufig auch erforderlich, nach einer Höhenverstellung des Fräsarms wieder eine vorherige, definierte vertikale Position anzufahren.

Bei den heute bekannten zahntechnischen Fräsgeräten erfolgt diese Höhenverstellung üblicherweise handbetätigt über Zahnstangen oder Gewindespindeln an einer zentralen Führungssäule. Bei einem bekannten zahntechnischen Fräsgerät (DE 36 11 518 C2) ist die Führungssäule drehbar am Grundkörper gelagert. Der Fräsarm ist höhenverstellbar und mittels eines Handhebels festklemmbar an der Führungssäule geführt. Mittels einer Arretierschraube ist die schwenkbare Führungssäule am Grundkörper arretierbar. Zur Höhenverstellung muß der Fräsarm manuell an der Führungssäule verschoben werden, wobei eine Schraubenfeder zum Gewichtsausgleich dient. Um die erforderliche Steifigkeit und Präzision für die jeweils nachfolgenden Fräs- und Bohrarbeiten zu erreichen, ist nach der Verstellung eine Betätigung der verschiedenen Fixiereinrichtungen erforderlich. Die Bedienelemente dieser Fixiereinrichtungen sind häufig an den verschiedensten Stellen der Fräsgeräte angeordnet und zwingen den Anwender somit zu einer wenig ergonomischen Arbeitsweise. Die erreichbaren Klemmkräfte der Fixiereinrichtungen hängen von der aufgewendeten Handkraft des Benutzers ab und sind somit nicht definiert, was zu Ungenauigkeiten bei den nachfolgenden Arbeitsschritten führen kann.

Für verschiedene Arbeitsgänge kann es erforderlich sein, eine definierte Vertikalposition nach einer Vertikalverschiebung des Fräsarms wiederzufinden. Hierzu werden meistens manuell verstellbare Anschläge auf der Vertikalführung verwendet. Diese mechanischen Anschläge müssen immer sauber gehalten werden, da z.B. aufliegende Metallspäne die Positioniergenäuigkeit beeinträchtigen können.

Aus der US-A-4478580 ist ein zahntechnisches Kopiergerät bekannt. Ein Bearbeitungswerkzeug geht von einem mittels einer Spindel horizontal verstellbaren Arm aus, der seinerseits über eine Säule vertikal verstellbar ist. Hierzu ist ein Schrittmotor vorgesehen.

Aufgabe der Erfindung ist es daher, ein zahntechnisches Fräsgerät der eingangs genannten Gattung so auszubilden, daß in einfacher Weise eine Vertikalverstellung durchgeführt werden kann, ohne daß hierfür Verstellhebel, Verstellhandräder oder Klemmhebel manuell betätigt werden müssen.

Diese Aufgabe wird erfindungsgemäß dadurch gelöst, daß der Spindelantrieb eine im Grundkörper gelagerte Gewindespindel aufweist, die mit einer Spindelmutter am Fräsarm in Eingriff steht.

Die Vertikalverstellung erfolgt hierbei ausschließlich durch Betätigung eines elektrischen Schalters, beispielsweise eines Tasters in einem für den Benutzer gut zugänglichen Bedienfeld.

Die Vertikalfixierung kann beispielsweise durch das Haltemoment des elektrischen Verstellmotors gewährleistet sein.

Erfindungsgemäß wird in konstruktiv einfacher und platzsparender Weise der elektromotorische Verstellantrieb verwirklicht.

Gemäß einer bevorzugten Ausführungsform ist vorgesehen, daß der Spindeltrieb selbsthemmend ausgeführt ist. Damit wird im stromlosen Zustand selbsttätig eine Vertikalfixierung des Fräsarms an der Führungssäule erreicht.

Zur Erzielung einer genauen Vertikalposition ist es vorteilhaft, daß der Spindeltrieb spielfrei einstellbar ist.

Vorzugsweise ist der elektrische Verstellmotor ein Schrittmotor. Dann kann die jeweils erreichte Vertikalposition aus der Anzahl der Motorschritte von einer elektrischen Steuerung erkannt und vorgegeben werden. Die Steuereinrichtung für den Schrittmotor liefert ein aus der Anzahl der Motorschritte abgeleitetes, der Vertikalposition des Fräsarms entsprechendes Positionssignal an eine Anzeige- und/oder Positioniereinrichtung. Eine eingestellte Position kann in der Positioniereinrichtung der Steuereinrichtung gespeichert und wieder angefahren werden.

Stattdessen ist es auch möglich, daß der Fräsarm einen Abgriff für eine mit der Führungssäule verbundene digitale Wegmeßeinrichtung aufweist, die ein der Vertikalposition des Fräsarms entsprechendes Positionssignal an die Anzeigeund/oder Positioniereinrichtung liefert.

Weitere vorteilhafte Ausgestaltungen des Erfindungsgedankens sind Gegenstand weiterer Unteransprüche.

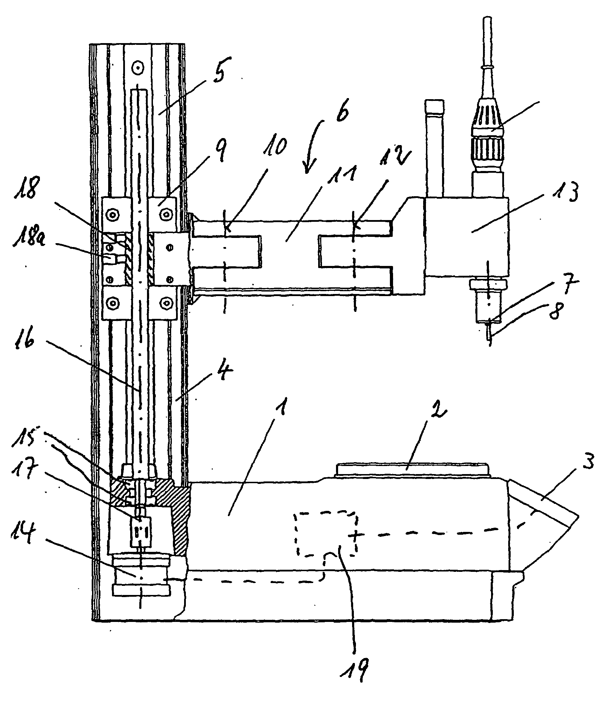

Nachfolgend wird ein Ausführungsbeispiel der Erfindung näher erläutert, das in der Zeichnung dargestellt ist.

Die einzige Figur der Zeichnung zeigt ein zahntechnisches Fräsgerät in einer Seitenansicht und teilweise im Schnitt. Ein Grundkörper 1 trägt einen Arbeitstisch 2 und ein elektrisches Bedienfeld 3. Der Arbeitstisch 2 dient zur Aufnahme der zu bearbeitenden zahntechnischen Objekte. Der Grundkörper 1 ist mit einer senkrechten Führungssäule 4 verbunden, die eine Führungsbahn 5 für einen gelenkigen Fräsarm 6 aufweist, der eine Fräseinheit 7 trägt, in der ein auswechselbares Fräs- oder Bohrwerkzeug 8 aufgenommen ist. Der Fräsarm 6 weist einen entlang der Führungsbahn 5 der Führungssäule 4 verfahrbaren Tragschlitten 9 auf. Der Tragschlitten 9 ist über eine erste senkrechte Schwenkachse 10 mit einem Fräsarm-Mittelstück 11 horizontal schwenkbar verbunden. Das Fräsarm-Mittelstück 11 ist über eine zweite senkrechte Schwenkachse 12 mit einem Träger 13 für die Fräseinheit 7 schwenkbar verbunden.

Die Vertikalbewegung und Vertikalpositionierung des Fräsarms 6 erfolgt durch einen elektromotorischen Höhenverstellantrieb, der einen durch einen elektrischen Verstellmotor 14 antreibbaren Spindeltrieb aufweist. Eine im Grundkörper 1 in Lagern 15 gelagerte, sich entlang der vertikalen Führungssäule 4 erstreckende Gewindespindel 16 ist über eine Kupplung 17 mit dem Verstellmotor 14 verbunden. Die Gewindespindel 16 steht mit einer im Tragschlitten 9 angeordneten Spindelmutter 18 in Eingriff. Die Spindelmutter 18 ist mittels einer Stellschraube 18a spielfrei einstellbar.

Der Verstellmotor 14 ist beim dargestellten Ausführungsbeispiel ein Schrittmotor, der von einer Steuereinrichtung 19 gesteuert wird, die mit dem Bedienfeld 3 als Anzeigeund/oder Positioniereinrichtung verbunden ist. Über einen Taster im Bedienfeld 3 läßt sich der Verstellmotor 14 ansteuern und damit der Fräsarm 6 vertikal verfahren. Die jeweilige Vertikalposition wird von der Steuerung 19 aus der Anzahl der Motorschritte errechnet. Die vertikale Fixierung des Fräsarms 6 wird durch das Haltemoment des als Schrittmotor ausgeführten Verstellmotors 14 und die Selbsthemmung des Spindeltriebs 16, 18 gewährleistet.

Über eine entsprechende Taste im Bedienfeld 3 läßt sich der Fräsarm 6 um einen vorgegebenen Weg vertikal anheben, beispielsweise um das Bohr- oder Fräswerkzeug 8 zu wechseln.

Durch nochmalige Betätigung einer Taste im Bedienfeld 3 wird der Fräsarm 6 wieder in die zuvor in der elektronischen Steuereinrichtung 19 gespeicherte Ausgangsposition abgesenkt.

Die Vertikalbewegung und Vertikalfixierung des Fräsarms 6 wird hierbei ausschließlich vom Bedienfeld 3 aus gesteuert. Zusätzliche Handgriffe im Bereich der Führungssäule 4 entfallen. Damit ist ein ergonomisches Arbeiten gewährleistet und die sichere Fixierung ist nicht von der Handkraft des Anwenders abhängig.

## Patentansprüche

1. Zahntechnisches Fräsgerät mit einem einen Arbeitstisch (2) tragenden Grundkörper (1), der mit einer Führungssäule (4) für einen höhenverstellbaren, eine Fräseinheit (7) aufnehmenden Fräsarm (6) verbunden ist, der seinerseits
entlang einer Führungsbahn (5) der Führungssäule (4) mittels eines elektromotorischen Höhenverstellantriebs (14, 16, 17) verfahrbar ist, der
einen durch einen elektrischen Verstellmotor (14) antreibbaren Spindeltrieb (16, 18) aufweist,
**dadurch gekennzeichnet,**
**daß** der Spindeltrieb eine im Grundkörper (1) gelagerte Gewindespindel (16) aufweist, die mit einer Spindelmutter (18) am Fräsarm (6) in Eingriff steht.

2. Zahntechnisches Fräsgerät nach Anspruch 1,
**dadurch gekennzeichnet,**
**daß** der Spindeltrieb (16, 18) selbsthemmend ausgeführt ist.

3. Zahntechnisches Fräsgerät nach Anspruch 1,
**dadurch gekennzeichnet,**
**daß** der Spindeltrieb (16, 18) spielfrei einstellbar ist.

4. Zahntechnisches Fräsgerät nach Anspruch 1,
**dadurch gekennzeichnet,**
**daß** der elektrische Verstellmotor (14) ein Schrittmotor ist.

5. Zahntechnisches Fräsgerät nach Anspruch 4,
**dadurch gekennzeichnet,**
**daß** eine Steuereinrichtung (19) für den Schrittmotor (14) ein aus der Anzahl der Motorschritte abgeleitetes, der Vertikalposition des Fräsarms (6) entsprechendes Positionssignal an eine Anzeige- und/oder Positioniereinrichtung liefert.

6. Zahntechnisches Fräsgerät nach Anspruch 1,
**dadurch gekennzeichnet,**
**daß** der Fräsarm (6) einen Abgriff für eine mit der Führungssäule (4) verbundene digitale Wegmeßeinrichtung aufweist, die ein der Vertikalposition des Fräsarms (6) entsprechendes Positionssignal an eine Anzeigeund/oder Positioniereinrichtung liefert.

7. Zahntechnisches Fräsgerät nach Anspruch 1,
**dadurch gekennzeichnet,**
**daß** der Fräsarm (6) einen entlang der Führungsbahn (5) der Führungssäule (4) verfahrbaren Tragschlitten (9) aufweist.

8. Zahntechnisches Fräsgerät nach Anspruch 7,
**dadurch gekennzeichnet,**
**daß** der Tragschlitten (9) über eine erste senkrechte Schwenkachse (10) mit einem Fräsarm-Mittelstück (11) schwenkbar verbunden ist und daß das Fräsarm-Mittelstück (11) über eine zweite senkrechte Schwenkachse (12) mit einem Träger (13) für die Fräseinheit (7) schwenkbar verbunden ist.

## Claims

1. A dental milling instrument with a base (1) supporting a working table (2), said base being connected to a guide column (4) for a vertically adjustable milling arm (6) receiving a milling unit (7), said milling arm is capable of being displaced along a guideway (5) of the guide column (4) by means of an electromotive height-adjusting drive (14, 16, 17), which comprises a screw link actuator (16, 18) which is capable of being driven by an electric adjusting motor (14),
**characterized in**
**that** the screw link actuator comprises a threaded spindle (16) which is supported in the base (1) and which is in engagement with a spindle nut (18) on the milling arm (6).

2. Dental milling instrument according to claim 1,
**characterized in**
**that** the screw link actuator (16, 18) is of self-locking construction.

3. Dental milling instrument according to claim 1,
**characterized in**
**that** the screw link actuator (16, 18) is capable of being set in backlash-free manner.

4. Dental milling instrument according to claim 1,
**characterized in**
**that** the electric adjusting motor (14) is a stepping motor.

5. Dental milling instrument according to claim 4,
**characterized in**
**that** a control device (19) for the stepping motor (14) supplies a position signal which is derived from the number of steps of the motor and which corresponds to the vertical position of the milling arm (6) to an indication and/or positioning device.

6. Dental milling instrument according to claim 1,
**characterized in**
**that** the milling arm (6) comprises a pick-up for a digital displacement-measuring device which is connected to the guide column (4) and which supplies a position signal corresponding to the vertical position of the milling arm (6) to an indicating and/or positioning device.

7. Dental milling instrument according to claim 1,
**characterized in**
**that** the milling arm (6) comprises a supporting slide (9) which is capable of being displaced along the guideway (5) of the guide column (4).

8. Dental milling instrument according to claim 7,
**characterized in**
**that** the supporting slide (9) is connected in swiveling manner to a middle portion (11) of the milling arm via a first vertical swivel axis (10) and in that the middle portion (11) of the milling arm is connected in swivelling manner to a support (13) for the milling unit (7) via a second vertical swivel axis (12).

## Revendications

1. Appareil dentaire de fraisage comportant un corps de base (1) supportant un plateau de travail (2) et relié à une colonne de guidage (4) destinée à un bras de fraisage (6) qui reçoit une unité de fraisage (7) réglable en hauteur, ce bras pouvant pour sa part se déplacer le long d'une glissière de guidage (5) de la colonne de guidage (4) à l'aide d'un entraînement de réglage de hauteur (14, 16, 17) électromotorisé et muni d'un actionnement à broche (16, 18) qui peut être entraîné par un servomoteur (14) électrique,
**caractérisé en ce que**
le mécanisme à broche présente une broche filetée (16), montée dans le corps de base (1), en prise avec un écrou de broche (18) situé sur le bras de fraisage (6).

2. Appareil dentaire de fraisage selon la revendication 1,
**caractérisé en ce que**
l'actionnement à broche (16, 18) est conçu sous forme autobloquante.

3. Appareil dentaire de fraisage selon la revendication 1,
**caractérisé en ce que**
l'actionnement à broche (16, 18) peut être réglé sans jeu.

4. Appareil dentaire de fraisage selon la revendication 1,
**caractérisé en ce que**
le servomoteur (14) électrique est un moteur pas à pas.

5. Appareil dentaire de fraisage selon la revendication 4,
**caractérisé en ce qu'**
une installation de commande (19) destinée au moteur pas à pas (14) fournit à une installation d'affichage et/ou de positionnement un signal de position qui est dérivé du nombre de pas du moteur et correspond à la position verticale du bras de fraisage (6).

6. Appareil dentaire de fraisage selon la revendication 1,
**caractérisé en ce que**
le bras de fraisage (6) présente une prise destinée à une installation numérique de mesure de déplacement, liée à la colonne de guidage (4), et qui fournit à une installation d'affichage et/ou de positionnement un signal de position correspondant à la position verticale du bras de fraisage (6).

7. Appareil dentaire de fraisage selon la revendication 1,
**caractérisé en ce que**
le bras de fraisage (6) présente un chariot porteur (9) mobile le long de la glissière de guidage (5) de la colonne de guidage (4).

8. Appareil dentaire de fraisage selon la revendication 7,
**caractérisé en ce que**
le chariot porteur (9) est relié de façon à pouvoir pivoter à une pièce centrale du bras de fraisage (11) au moyen d'un premier axe de pivotement (10) vertical, et la pièce centrale du bras de fraisage (11) est reliée de façon à pouvoir pivoter à un support (13) destiné à l'unité de fraisage (7) au moyen d'un deuxième axe de pivotement (12) vertical.
